# EUROPÄISCHE PATENTSCHRIFT

(11) **EP 1 967 709 B1**
(45) Veröffentlichungstag und Bekanntmachung des Hinweises auf die Patenterteilung: **09.09.2009**
(21) Anmeldenummer: 08152247.6
(22) Anmeldetag: 04.03.2008
(51) Int. Cl.: F01N 3/021, F01N 3/28, F01N 7/18

(54) **Abgasbehandlungseinrichtung und zugehöriges Herstellungsverfahren**
Exhaust gas treatment device and method of manufacturing
Dispositif de traitement des gaz d'échappement et son procédé de fabrication

(30) Priorität: 09.03.2007 DE 102007011956
(43) Veröffentlichungstag der Anmeldung: 10.09.2008
(73) Patentinhaber: J. Eberspächer GmbH & Co. KG, 73730 Esslingen (DE)
(72) Erfinder: Wirth, Georg, 73230 Kirchheim/Teck (DE)
(74) Vertreter: Bongen, Renaud & Partner

(56) Entgegenhaltungen:
- EP-A- 0 236 817
- EP-A- 1 498 586
- DE-A1-102005 002 857
- US-A- 4 050 245

## Beschreibung

Die vorliegende Erfindung betrifft eine Abgasbehandlungseinrichtung für eine Abgasanlage einer Brennkraftmaschine, insbesondere eines Kraftfahrzeugs, mit den Merkmalen des Oberbegriffs des Anspruchs 1. Die Erfindung betrifft außerdem einen Abgasreinigungseinsatz für eine derartige Abgasbehandlungseinrichtung. Ferner betrifft die Erfindung ein Verfahren zum Herstellen eines derartigen Abgasreinigungseinsatzes.

Aus der EP 1 498 586 B1 ist eine Abgasbehandlungseinrichtung der eingangs genannten Art bekannt, die ein Gehäuse aufweist, das in eine Abgasanlage einbindbar ist. Im Gehäuse ist zumindest ein Abgasreinigungseinsatz angeordnet, der ein endseitig offenes Einsatzgehäuse aufweist. Im Einsatzgehäuse ist zumindest ein Abgasreinigungselement angeordnet, wie z.B. ein Partikelfilter oder ein Katalysatorelement. Zur Halterung dieses Abgasreinigungseinsatzes im Gehäuse weist das Gehäuse zumindest einen Einsatzträger auf, der wenigstens eine Halteöffnung besitzt. Ein Endabschnitt des Einsatzgehäuses ist ringförmig an einem Öffnungsrand der Halteöffnung abgestützt.

Bei der bekannten Abgasbehandlungseinrichtung ist der jeweilige Öffnungsrand zylindrisch ausgestaltet und mit einem vorbestimmten konstanten Querschnitt versehen. Der Endabschnitt des jeweiligen Abgasreinigungseinsatzes ist dazu komplementär ebenfalls zylindrisch ausgeführt, so dass der jeweilige Abgasreinigungseinsatz mit besagtem Endabschnitt axial in den Öffnungsrand des jeweiligen Einsatzträgers einsteckbar ist. Vorteilhaft ist hierbei, dass die Dimensionierung und Formgebung des Endabschnitts unabhängig von der Dimensionierung eines an den Endabschnitt anschließenden Gehäusemantels des Einsatzgehäuses erfolgen kann. Hierdurch können die Endabschnitte stets passend zu den Öffnungsrändern gefertigt werden, während unabhängig davon das jeweilige Einsatzgehäuse jeweils an das jeweilige Abgasreinigungselement angepasst werden kann, dessen Herstellungstoleranzen relativ weit streuen können.

Die vorliegende Erfindung beschäftigt sich mit dem Problem, für eine Abgasbehandlungseinrichtung der eingangs genannten Art eine verbesserte Ausführungsform anzugeben, die sich insbesondere durch eine vereinfachte Montierbarkeit auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, beim jeweiligen Abgasreinigungseinsatz zumindest eine der Komponenten Endabschnitt und zugehöriger Öffnungsrand des jeweiligen Gehäuseträgers kugelschalensegmentförmig gekrümmt zu formen bzw. auszugestalten. Die jeweils andere Komponente ist dann komplementär bzw. passend zur jeweiligen Kugelschalensegmentform entweder ebenfalls kugelschalensegmentförmig ausgestaltet oder kegelmantelförmig ausgestaltet. Der Endabschnitt und der zugehörige Öffnungsrand sind somit insbesondere komplementär zueinander ballig ausgeführt. Durch diese Bauweise ist es insbesondere möglich, während der Montage die axiale Ausrichtung des Einsatzgehäuses gegenüber dem Einsatzträger zu verändern, wodurch insbesondere Toleranzabweichungen ausgeglichen werden können. Die sphärische Ausgestaltung zumindest einer der Kontaktflächen von Öffnungsrand und Endabschnitt ermöglicht somit die Einstellung einer Neigung zwischen der Längsmittelachse des Einsatzgehäuses und der Normalrichtung einer Öffnungsebene, in welcher die Halteöffnung des Einsatzträgers liegt. Durch die so geschaffene Möglichkeit zum Toleranzausgleich wird die Montierbarkeit der Abgasbehandlungseinrichtung verbessert. Außerdem können Herstellungstoleranzen größer gewählt werden, was eine preiswertere Herstellung, z.B. des jeweiligen Einsatzträgers im Gehäuse, ermöglicht.

Entsprechend einer bevorzugten Ausführungsform können der Endabschnitt und der Öffnungsrand so aufeinander abgestimmt sein, dass der Endabschnitt in radialer Richtung über den Öffnungsrand vorsteht. Eine derartige Bauweise vereinfacht z.B. die Anbringung einer ringförmig geschlossenen Schweißnaht zur gasdichten Verbindung des Endabschnitts mit dem Öffnungsrand.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

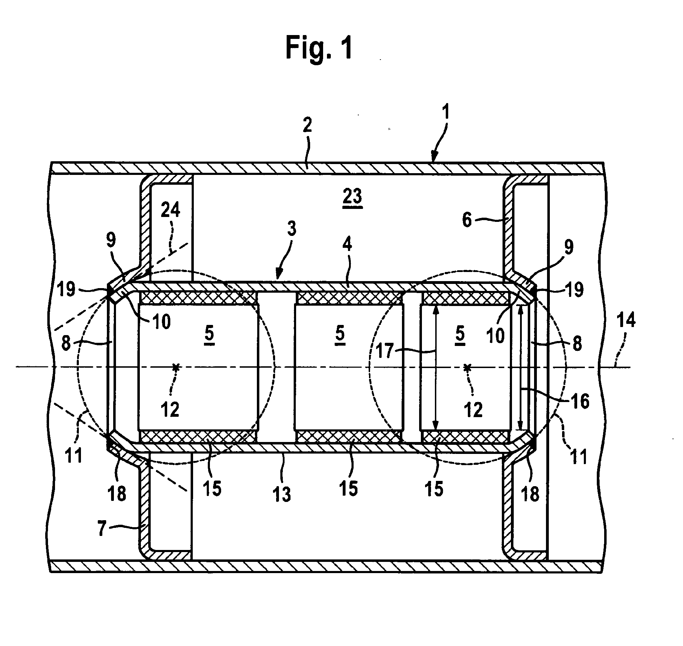

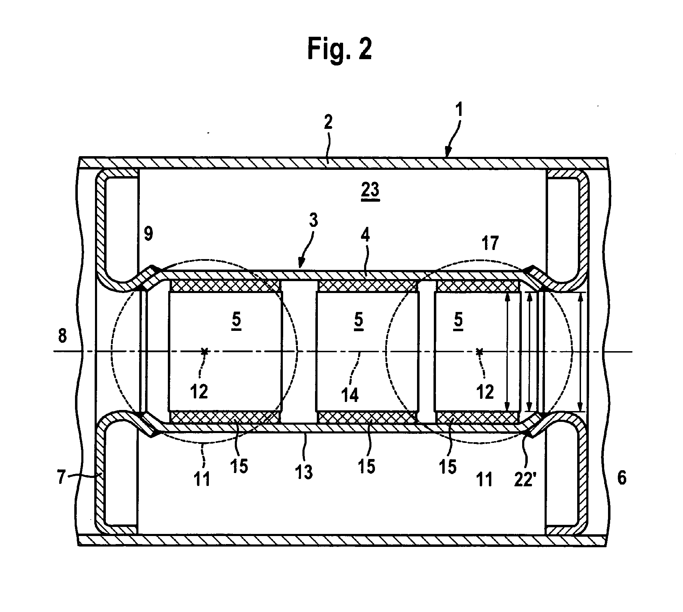

- Fig. 1 und 2: jeweils einen stark vereinfachten, prinzipiellen Längsschnitt durch eine Abgasbehandlungseinrichtung, bei verschiedenen Ausführungsformen.

Entsprechend den Fig. 1 und 2 weist eine Abgasbehandlungseinrichtung 1 ein Gehäuse 2 auf, in dem zumindest ein Abgasreinigungseinsatz 3 angeordnet ist. Die Abgasbehandlungseinrichtung 1 ist zur Verwendung in einer hier nicht gezeigten Abgasanlage einer Brennkraftmaschine bestimmt, die insbesondere in einem Fahrzeug, und zwar vorzugsweise in einem Nutzfahrzeug, angeordnet sein kann. Für den Einbau in die Abgasanlage ist das Gehäuse 2 in dieselbe einbindbar. Das bedeutet, dass das Gehäuse 2 über hier nicht gezeigte, geeignete Anschlüsse verfügt, die ein Anschließen des Gehäuses 2 bzw. der Abgasbehandlungseinrichtung 1 an entsprechende Leitungen der Abgasanlage ermöglichen.

Der Abgasreinigungseinsatz 3 ist durch ein rohrförmiges, endseitig bzw. beidseitig offenes Einsatzgehäuse 4 gebildet, in dem zumindest ein Abgasreinigungselement 5 angeordnet ist. Im gezeigten Beispiel sind im Einsatzgehäuse 4 drei Abgasreinigungselemente 5 hintereinander, also in Reihe angeordnet. Ebenso ist eine andere Anzahl an Abgasreinigungselementen 5 denkbar. Beim jeweiligen Abgasreinigungselement 5 kann es sich beispielsweise um ein Partikelfilter oder um ein Katalysatorelement handeln, wie z.B. ein katalytisch beschichteter keramischer Monolith. Die Abgasreinigungselemente 5 können Oxidationskatalysatoren oder SCR-Katalysatoren oder dergleichen sein. Im Beispiel ist nur ein Abgasreinigungseinsatz 3 erkennbar. Es ist klar, dass im Gehäuse 2 auch zwei oder mehr derartige Abgasreinigungseinsätze 3 angeordnet sein können.

Das Gehäuse 2 weist zumindest einen Einsatzträger 6 bzw. 7 auf. Im gezeigten Beispiel sind zwei derartige Einsatzträger 6,7 vorgesehen. Der jeweilige Einsatzträger 6 weist jeweils wenigstens eine Halteöffnung 8 auf, die jeweils mit einem Öffnungsrand 9 ringförmig eingefasst ist.

Das Einsatzgehäuse 4 weist zumindest einen Endabschnitt 10 auf, der über einen derartigen Öffnungsrand 9 an einem dieser Einsatzträger 6,7 ringförmig abgestützt ist. Im gezeigten Beispiel weist das Einsatzgehäuse 4 zwei derartige Endabschnitte 10 auf, die jeweils über einen derartigen Öffnungsrand 9 an jeweils einem der Einsatzträger 6,7 abgestützt sind. Sofern am jeweiligen Einsatzträger 6,7 mehrere Abgasreinigungseinsätze 3 abgestützt sind, kann der jeweilige Einsatzträger 6,7 eine entsprechende Anzahl an Halteöffnungen 8 sowie Öffnungsränder 9 aufweisen. Ebenso ist es möglich, das jeweilige Einsatzgehäuse 4 nur bei einem solchen Einsatzträger 6, 7 mit dem einen Endabschnitt 10 am Öffnungsrand 9 abzustützen und mit dem anderen Endabschnitt 10 durch die Halteöffnung 8 des jeweils anderen Einsatzträgers 6, 7 durchzustrecken. Dieser andere Endabschnitt 10 ist dann vom jeweiligen vorzugsweise geschlitzten Öffnungsrand 9 radial vorgespannt fixiert und ermöglicht einen axialen Schiebesitz.

Beim erfindungsgemäßen Abgasreinigungseinsatz 3 bzw. bei der erfindungsgemäßen Abgasbehandlungseinrichtung 1 bilden der jeweilige Öffnungsrand 9 und der jeweilige Endabschnitt 10 bevorzugt zueinander komplementäre Kugelschalensegmente, um so eine ringförmige, flächige Abstützung zwischen Öffnungsrand 9 und Endabschnitt 10 zu realisieren. Alternativ kann auch vorgesehen sein, dass nur eine der Komponenten Öffnungsrand 9 und Endabschnitt 10, z.B. der Endabschnitt 10, als Kugelschalensegment ausgestaltet ist, während die jeweils andere Komponente, z.B. der Öffnungsrand 9, als passendes Kegelmantelsegment ausgestaltet ist. Hierdurch wird ebenfalls eine ringförmige, linienförmige Abstützung zwischen Öffnungsrand 9 und Endabschnitt 10 realisiert.

In den Fig. 1 und 2 ist mit unterbrochenen Linien jeweils eine virtuelle bzw. gedachte Kugelschale 11 angedeutet. Der jeweilige Mittelpunkt dieser Kugelschale 11 ist dabei mit 12 bezeichnet. Der jeweilige Endabschnitt 10 des Einsatzgehäuses 4 ist dementsprechend so geformt, dass seine Außenkontur bzw. Außenfläche ein Kugelschalensegment bildet, das einen Bestandteil der Kugelschale 11 ist, also in dieser liegt. Dazu komplementär ist der passende Öffnungsrand 9 so geformt, dass seine dem Abgasreinigungseinsatz 3 zugewandte Innenkontur bzw. Innenfläche ein Kugelschalensegment bildet, das ebenfalls ein Bestandteil der Kugelschale 11 ist , also in dieser liegt. Somit können sich der Öffnungsrand 9 und der Endabschnitt 10 entlang eines Segments der Kugelschale 11 ringförmig und flächig aneinander abstützen. Alternativ kann zumindest an einer Seite des Einsatzgehäuses 4 der Endabschnitt 10 außen oder der Öffnungsrand 9 innen in einem in Fig. 1 links angedeuteten Kegelmantel 24 liegen, so dass die jeweilige Außenkontur bzw. die jeweilige Innenkontur ein Kegelmantelsegment bildet. Bei einer solchen Ausgestaltung können sich der Öffnungsrand 9 und der Endabschnitt 10 entlang der Segmente von Kugelschale 11 und Kegelmantel 24 ringförmig und linienförmig aneinander abstützen.

Die gewählte Formgebung für den Endabschnitt 10 und den Öffnungsrand 9 ermöglicht während der Montage eine Ausrichtung des Abgasreinigungseinsatzes 3 relativ zum jeweiligen Einsatzträger 6,7, in Form einer Drehbewegung um den Mittelpunkt 12. Hierdurch wird die Montage der Abgasbehandlungseinrichtung 1 erleichtert, da Herstellungstoleranzen einfacher ausgleichbar sind.

Bei den hier gezeigten Ausführungsformen erfolgt die Formgebung von Endabschnitt 10 und Öffnungsrand 9 bevorzugt so, dass sich der Mittelpunkt 12 der jeweiligen Kugelschale 11 im Inneren des Einsatzgehäuses 4 befindet. Dies hat zur Folge, dass der jeweilige Endabschnitt 10 bezüglich eines an den jeweiligen Endabschnitt 10 anschließenden Gehäusemantels 13 des Einsatzgehäuses 4 radial nach innen vorsteht. Besagter Gehäusemantel 13 ist zylindrisch ausgestaltet, bevorzugt kreiszylindrisch. Eine Längsmittelachse 14 des Einsatzgehäuses 4 definiert eine Axialrichtung für den jeweiligen Abgasreinigungseinsatz 3.

Bei den hier gezeigten Ausführungsformen sind die drei Abgasreinigungselemente 5, die axial hintereinander im Einsatzgehäuse 4 angeordnet sind, jeweils von einem Lagermantel 15 in der Umfangsrichtung ringförmig umhüllt. Es kann auch ein gemeinsamer Lagermantel 15 vorgesehen sein. Der jeweilige Lagermantel 15 besteht aus einem herkömmlichen, thermisch isolierenden Lagermaterial, mit dessen Hilfe die einzelnen Abgasreinigungselemente 5 unter radialer Vorspannung im Einsatzgehäuse 4 gehalten sind. Bevorzugt sind nun die jeweiligen Endabschnitte 10 so umgeformt, dass sie gezielt um ein vorbestimmtes Maß radial nach innen bezüglich des Gehäusemantels 13 vorstehen. Besagtes Maß ist dabei vorzugsweise so gewählt, dass der jeweilige Endabschnitt 10 den Lagermantel 15 des benachbarten Abgasreinigungselements 5 in axialer Richtung überlappt. Hierdurch bildet der jeweilige Endabschnitt 10 einerseits einen Kantenschutz für das benachbarte Abgasreinigungselement 5. Andererseits verhindert der Endabschnitt 10 dadurch eine unmittelbare Beaufschlagung des Lagermantels 15 mit heißen Abgasen.

Zweckmäßig sind die Endabschnitte 10 soweit nach innen umgebogen, dass sich für den jeweiligen Endabschnitt ein Öffnungsquerschnitt 16 einstellt, der weitgehend einem durchströmbaren Querschnitt 17 des jeweiligen Abgasreinigungselements 5 entspricht. Das heißt, der Öffnungsquerschnitt 16 des jeweiligen Endabschnitts 10 ist etwa gleich groß wie der durchströmbare Querschnitt 17 des benachbarten Abgasreinigungselements 5.

Bei der in Fig. 1 gezeigten Ausführungsform steht der Endabschnitt 10 in radialer Richtung nach innen über den zugehörigen Öffnungsrand 9 vor. Hierdurch wird eine axial offene, ringförmig umlaufende Rinne 18 ausgebildet. In dieser Rinne 18 kann zweckmäßig eine ringförmig geschlossen umlaufende Schweißnaht 19, insbesondere eine Kehlschweißnaht, angebracht werden, um das Einsatzgehäuse 4 am jeweiligen Einsatzträger 6,7 zu befestigen. Besagte Schweißnaht 19 verbindet im gezeigten Beispiel eine nicht näher bezeichnete Stirnseite des Öffnungsrands 9 mit der sphärischen Außenseite des Endabschnitts 10. Bei der in Fig. 1 gezeigten Ausführungsform kann die Schweißnaht 19 besonders einfach automatisiert realisiert werden.

Ein besonderer Vorteil der kugeligen Ausgestaltung des jeweiligen Endabschnitts 10 und es jeweiligen Öffnungsrands 9 ist darin zu sehen, dass die kugelige Gestalt des Endabschnitts 10 stets mit dem gleichen Radius realisiert werden kann, der komplementär zum Radius des zugehörigen Öffnungsrands 9 gewählt ist, und zwar unabhängig von der jeweiligen Formgebung des übrigen Einsatzgehäuses 4. Also insbesondere ist der Durchmesser des zylindrischen bzw. kreiszylindrischen Gehäusemantels 13 unabhängig vom Radius des kugelschalensegmentförmigen Endabschnitts 10 wählbar. Hierdurch kann das Einsatzgehäuse 4 im Bereich seines Mantels 13 einfach an toleranzbedingt unterschiedliche Durchmesser der Abgasreinigungselemente 5 angepasst werden, während gleichzeitig der jeweilige Endabschnitt 10 an den zugehörigen Öffnungsrand 9 angepasst ist.

Bei der in Fig. 1 gezeigten Ausführungsform ist der Öffnungsrand 9 so umgeformt, dass er vom zugehörigen Einsatzträger 6,7 weg gerichtet vom Einsatzgehäuse 4 absteht. Im Unterschied dazu zeigt Fig. 2 eine andere Ausführungsform, bei welcher der jeweilige Öffnungsrand 9 zum Einsatzgehäuse 4 hin vom jeweiligen Einsatzträger 6,7 absteht. Bei dieser Ausführungsform besitzt der Öffnungsrand 9 eine vergleichsweise komplexe Gestalt. Der jeweilige Öffnungsrand 9 bildet hier für den jeweiligen Abgasreinigungseinsatz 3 einen Einlauftrichter bzw. einen Auslauftrichter mit abgerundeter Strömungskontur. Hierdurch kann der Strömungswiderstand der Abgasbehandlungseinrichtung 1 reduziert werden. Insbesondere besitzt die Halteöffnung 8 des jeweiligen Einsatzträgers 6,7 einen Öffnungsquerschnitt 20, der dem durchströmbaren Querschnitt 17 des jeweiligen Abgasreinigungselements 5 entspricht. Bei entsprechend dimensioniertem Endabschnitt 10 kann an einer hier nicht näher bezeichneten axialen Stirnseite des Endabschnitt 10 eine radial innen offene, ringförmige Rinne 21 ausgebildet werden, entlang der wieder eine Schweißnaht 22 anbringbar ist, um das Einsatzgehäuse 4 mit dem jeweiligen Einsatzträger 6,7 zu verbinden. Alternativ dazu kann auch eine außenliegende, ringförmig geschlossene Schweißnaht 22' vorgesehen sein, die das stirnseitige Ende des Öffnungsrands 9 außen mit dem Endabschnitt 10 verbindet.

Durch die jeweilige, ringförmig geschlossen ausgeführte Schweißnaht 19 bzw. 22 bzw. 22' kann eine gasdichte Verbindung zwischen dem Einsatzgehäuse 4 und dem jeweiligen Einsatzträger 6,7 realisiert werden.

Das Gehäuse 2 enthält bei den hier gezeigten Ausführungsformen einen Schalldämpferraum 23. Durch diesen Schalldämpferraum 23 ist das jeweilige Einsatzgehäuse 4 hindurchgeführt. In den Beispielen umschließt der Schalldämpferraum 23 das Einsatzgehäuse 4 Umfangsrichtung. Beim Schalldämpferraum 23 kann es sich beispielsweise um einen Absorptionsraum handeln, der mit einem entsprechenden Schallschluckstoff gefüllt sein kann. Ebenfalls kann es sich beim Schalldämpferraum 23 um eine Reflexionskammer oder um eine Resonanzkammer, insbesondere eines Helmholtz-Resonators, handeln. Die hier gezeigten Einsatzträger 6,7 bilden innerhalb des Gehäuses 2 jeweils einen Zwischenboden bzw. eine Zwischenwand zur Aussteifung des Gehäuses 2 bzw. zur gasdichten Begrenzung des Schalldämpferraums 23.

Die Herstellung des Abgasreinigungseinsatzes 3 bzw. der Abgasbehandlungseinrichtung 1 gestaltet sich vorzugsweise wie folgt:

Zunächst wird das wenigstens eine Abgasreinigungselement 5 mit dem Lagermantel 15 in das Einsatzgehäuse 4 eingebracht. Das Einsatzgehäuse 4 weist zu diesem Fertigungszeitpunkt zumindest an einem seiner Enden, vorzugsweise an beiden Enden, den gleichen Querschnitt auf, wie im Bereich seines Gehäusemantels 13. Das Einbringen der jeweiligen Abgasreinigungselemente 5 zusammen mit ihrem jeweiligen Lagermantel 15 in das Einsatzgehäuse 4 ist auf unterschiedliche Weise realisierbar. Beispielsweise kann das Einsatzgehäuse 4 in einem Ausgangszustand einen vergleichsweise großen Innenquerschnitt aufweisen, so dass die Abgasreinigungselemente 5 mit unkomprimiertem Lagermantel 15 axial in das zylindrische Einsatzgehäuse 4 einsteckbar sind. Anschließend kann das Einsatzgehäuse 4 hinsichtlich seines Innenquerschnitts und automatisch auch hinsichtlich seines Außenquerschnitts reduziert werden, bis sich die gewünschte radiale Verpressung des jeweiligen Lagermantels 15 einstellt. Ebenso ist es grundsätzlich möglich, das jeweilige Abgasreinigungselement 5 zusammen mit dem Lagermantel 15 über einen Trichter axial in das Einsatzgehäuse 4 einzupressen.

Nach dem Einbringen der Abgasreinigungselemente 5 wird das Einsatzgehäuse 4 an seinem jeweiligen Endabschnitt 10 umgeformt, derart, dass aus dem bis dahin zylindrischen Endabschnitt 10 der gewünschte kugelschalensegmentförmige Endabschnitt 10 entsteht. Dabei kann die Umformung des jeweiligen Endabschnitts 10 nach einer Querschnittsreduzierung des Einsatzgehäuses 4 oder gleichzeitig mit der Querschnittsreduzierung des Einsatzgehäuses 4 durchgeführt werden.

Besonders vorteilhaft ist bei dieser Vorgehensweise, dass die kugelschalensegmentförmige Gestalt des jeweiligen Endabschnitts 10 völlig unabhängig vom endgültigen Querschnitt des Einsatzgehäuses 4 realisierbar ist. Hierdurch kann eine klar definierte mechanische Schnittstelle zwischen dem jeweiligen Abgasreinigungseinsatz 3 und dem zugehörigen Einsatzträger 6,7 geschaffen werden. Gleichzeitig bleibt die Möglichkeit erhalten, das jeweilige Einsatzgehäuse 4 an toleranzbedingt unterschiedliche Querschnitte der Abgasreinigungselemente 5 anzupassen.

## Patentansprüche

1. Abgasbehandlungseinrichtung für eine Abgasanlage einer Brennkraftmaschine, insbesondere eines Kraftfahrzeugs,
- mit einem Gehäuse (2), das in die Abgasanlage einbindbar ist,
- mit wenigstens einem Abgasreinigungseinsatz (3), der im Gehäuse (2) angeordnet ist,
- wobei der Abgasreinigungseinsatz (3) ein endseitig offenes Einsatzgehäuse (4) aufweist, in dem zumindest ein Abgasreinigungselement (5) angeordnet ist,
- wobei das Gehäuse (2) zumindest einen Einsatzträger (6,7) aufweist, der zumindest eine Halteöffnung (8) aufweist, an deren Öffnungsrand (9) ein Endabschnitt (10) des Einsatzgehäuses (4) ringförmig abgestützt ist,
**dadurch gekennzeichnet,**
**dass** eine der Komponenten Öffnungsrand (9) und Endabschnitt (10) ein Kugelschalensegment bildet, während die jeweils andere Komponente ein dazu passendes Kegelmantelsegment oder ein dazu komplementäres Kugelschalensegment bildet.

2. Abgasbehandlungseinrichtung nach Anspruch 1,
**dadurch gekennzeichnet,**
**dass** ein Mittelpunkt (12) einer gedachten Kugelschale (11), an welcher der Öffnungsrand (9) am Endabschnitt (10) anliegt, im Inneren des Einsatzgehäuses (4) liegt.

3. Abgasbehandlungseinrichtung nach Anspruch 1 oder 2,
**dadurch gekennzeichnet,**
**dass** der Endabschnitt (10) radial nach innen über einen zylindrischen Mantel (13) des Einsatzgehäuses (4) vorsteht.

4. Abgasbehandlungseinrichtung nach Anspruch 3,
**dadurch gekennzeichnet,**
- **dass** der Endabschnitt (10) soweit radial nach innen vorsteht, dass er einen das jeweilige Abgasreinigungselement (5) umhüllenden Lagermantel (15) axial überlappt, und/oder
- **dass** der Endabschnitt (10) soweit radial nach innen vorsteht, dass ein Öffnungsquerschnitt (16) des Endabschnitts (10) im wesentlichen einem durchströmbaren Querschnitt (17) des jeweiligen Abgasreinigungselements (5) entspricht.

5. Abgasbehandlungseinrichtung nach einem der Ansprüche 1 bis 4,
**dadurch gekennzeichnet,**
**dass** der Endabschnitt (10) in radialer Richtung über den Öffnungsrand (9) vorsteht.

6. Abgasbehandlungseinrichtung nach einem der Ansprüche 1 bis 5,
**dadurch gekennzeichnet,**
- **dass** der Öffnungsrand (9) stirnseitig über wenigstens eine Schweißnaht (19) mit dem Endabschnitt (10) verbunden ist, und/oder
- **dass** der Endabschnitt (10) stirnseitig über wenigstens eine Schweißnaht (22) mit dem Öffnungsrand (9) verbunden ist.

7. Abgasbehandlungseinrichtung nach einem der Ansprüche 1 bis 6,
**dadurch gekennzeichnet,**
- **dass** der Öffnungsrand (9) vom Einsatzgehäuse (4) weggerichteten vom Einsatzträger (4) absteht, und/oder
- **dass** der Öffnungsrand (9) zum Einsatzgehäuse (4) hin vom Einsatzträger (6,7) absteht.

8. Abgasbehandlungseinrichtung nach einem der Ansprüche 1 bis 7,
**dadurch gekennzeichnet,**
**dass** das Gehäuse (2) einen Schalldämpferraum (23) enthält, durch den das Einsatzgehäuse (4) hindurchgeführt ist.

9. Abgasreinigungseinsatz für eine Abgasbehandlungseinrichtung (1) nach einem der Ansprüche 1 bis 8, mit einem endseitig offenen Einsatzgehäuse (4), in dem wenigstens ein Abgasreinigungselement (5) angeordnet ist und das zumindest einen kugelschalensegmentförmigen Endabschnitt (10) aufweist.

10. Verfahren zum Herstellen eines Abgasreinigungseinsatzes (3) für eine Abgasbehandlungseinrichtung (1) nach einem der Ansprüche 1 bis 8, **gekennzeichnet durch** folgende Schritte:
- Einbringen des wenigstens einen Abgasreinigungselements (5) in das zylindrische Einsatzgehäuse (4),
- Umformen wenigstens eines zylindrischen Endabschnitts des Einsatzgehäuses (4) in einen kugelschalensegmentförmigen Endabschnitt (10).

## Claims

1. An exhaust gas treatment device for an exhaust system of an internal combustion engine, more preferably of a motor vehicle,
• with a housing (2) that can be incorporated in the exhaust system,
• with at least one exhaust gas cleaning insert (3) which is arranged in the housing (2),
• wherein the exhaust gas cleaning insert (3) comprises an insert housing (4) open at an end side in which at least one exhaust gas cleaning element (5) is arranged,
• wherein the housing (2) comprises at least one insert carrier (6, 7) which comprises at least one holding opening (8) at the opening edge (9) of which an end section (10) of the insert housing (4) is supported ring-like,
**characterized in that**
one of the components opening edge (9) and end section (10) forms a ball shell segment while the respective other component forms a surface of a cone segment matching this or a ball shell segment complementary to this.

2. The exhaust gas treatment device according to Claim 1,
**characterized in that**
a centre point (12) of an imaginary ball shell (11) against which rests the opening edge (9) on the end section (10) is located in the interior of the insert housing (4).

3. The exhaust gas treatment device according to Claim 1 or 2, **characterized in that**
the end section (10) protrudes radially to the inside over a cylindrical jacket (13) of the insert housing (4).

4. The exhaust gas treatment device according to Claim 3,
**characterized in that**
• the end section (10) protrudes radially to the inside so far that it axially overlaps a bearing jacket (15) enveloping the respective exhaust gas cleaning element (5), and/or
• the end section (10) protrudes radially to the inside so far that an opening cross section (16) of the end section (10) substantially corresponds to a cross section (17) of the respective exhaust gas cleaning element (5) through which a flow can flow.

5. The exhaust gas treatment device according to any one of the Claims 1 to 4, **characterized in that** the end section (10) in radial direction protrudes over the opening edge (9).

6. The exhaust gas treatment device according to any one of the Claims 1 to 5, **characterized in that**
• the opening edge (9) at the face end is joined with the end section (10) via at least one weld seam (19), and/or
• the end section (10) at the face end is joined with the opening edge (9) via at least one weld seam (22).

7. The exhaust gas treatment device according to any one of the Claims 1 to 6, **characterized in that**
• the opening edge (9) directed away from the insert housing (4) stands away from the insert carrier (4), and/or
• the opening edge (9) stands away from the insert carrier (6, 7) towards the insert housing (4).

8. The exhaust gas treatment device according to any one of the Claims 1 to 7, **characterized in that** the housing (2) contains a silencer chamber (23) through which the insert housing (4) is passed.

9. An exhaust gas cleaning insert for an exhaust gas treatment device (1) according to any one of the Claims 1 to 8 with insert housing (4) open on an end side in which at least one exhaust gas cleaning element (5) is arranged and which comprises at least one ball shell segment-shaped end section (10).

10. A method for producing an exhaust gas-cleaning insert (3) for an exhaust gas treatment device (1) according to any one of the Claims 1 to 8, **characterized by** the following steps:
• introducing the at least one exhaust gas cleaning element (5) in the cylindrical insert housing (4),
• forming of at least one cylindrical end section of the insert housing (4) into a ball shell segment-shaped end section (10).

## Revendications

1. Dispositif de traitement de gaz brûlés pour une installation d'échappement d'un moteur à combustion interne, en particulier d'un véhicule automobile, comprenant
- un carter (2), qui peut être intégré dans l'installation d'échappement,
- au moins un insert de nettoyage de gaz brûlés (3), qui est disposé dans le carter (2),
- l'insert de nettoyage de gaz brûlés (3) comprenant un boîtier d'insert (4) ouvert côté extrémité, dans lequel est disposé au moins un élément de nettoyage de gaz brûlés (5),
- le boîtier (2) comprenant au moins un support d'insert (6, 7), qui comprend au moins une ouverture de retenue (8), sur le bord d'ouverture (9) de laquelle est soutenue une partie d'extrémité (10) du carter d'insert (4) à la façon d'une bague,
**caractérisé en ce que**
l'un des composants bord d'ouverture (9) et partie d'extrémité (10) forme un segment de coque sphérique, alors que l'autre composant respectif forme un segment d'enveloppe conique adapté à ce composant ou un segment de coque sphérique complémentaire à ce composant.

2. Dispositif de traitement de gaz brûlés selon la revendication 1,
**caractérisé en ce que**
un centre (12) d'une coque sphérique (11) imaginaire, sur laquelle le bord d'ouverture (9) s'applique sur la partie d'extrémité (10), est disposé à l'intérieur du carter d'insert (4).

3. Dispositif de traitement de gaz brûlés selon la revendication 1 ou 2,
**caractérisé en ce que**
la partie d'extrémité (10) dépasse radialement vers l'intérieur d'une enveloppe (13) cylindrique du carter d'insert (4).

4. Dispositif de traitement de gaz brûlés selon la revendication 3,
**caractérisé en ce que**
- la partie d'extrémité (10) dépasse radialement vers l'intérieur de telle sorte qu'elle recouvre axialement une enveloppe de palier (15) enveloppant l'élément de nettoyage de gaz brûlés (5) respectif et/ou
- **en ce que** la partie d'extrémité (10) dépasse radialement vers l'intérieur de telle sorte qu'une section d'ouverture (16) de la partie d'extrémité (10) correspond sensiblement à une section (17) pouvant être traversée de l'élément de nettoyage de gaz brûlés (5) respectif.

5. Dispositif de traitement de gaz brûlés selon l'une quelconque des revendications 1 à 4,
**caractérisé en ce que**
la partie d'extrémité (10) dépasse dans le sens radial du bord d'ouverture (9).

6. Dispositif de traitement de gaz brûlés selon l'une quelconque des revendications 1 à 5,
**caractérisé en ce que**
- le bord d'ouverture (9) est relié côté avant au moyen d'au moins un joint soudé (19) à la partie d'extrémité (10), et/ou
- **en ce que** la partie d'extrémité (10) est reliée côté avant au moyen d'au moins un joint soudé (22) au bord d'ouverture (9).

7. Dispositif de traitement de gaz brûlés selon l'une quelconque des revendications 1 à 6,
**caractérisé en ce que**
- le bord d'ouverture (9) dépasse du support d'insert (4) en partant du carter d'insert (4), et/ou
- **en ce que** le bord d'ouverture (9) dépasse du support d'insert (6, 7) en direction du carter d'insert (4).

8. Dispositif de traitement de gaz brûlés selon l'une quelconque des revendications 1 à 7,
**caractérisé en ce que**
le carter (2) contient un espace de silencieux (23) à travers lequel le carter d'insert (4) est guidé.

9. Insert de nettoyage de gaz brûlés pour un dispositif de traitement de gaz brûlés (1) selon l'une quelconque des revendications 1 à 8, comprenant un carter d'insert (4) ouvert côté extrémité, dans lequel est disposé au moins un élément de nettoyage de gaz brûlés (5) et qui comporte au moins une partie d'extrémité (10) en forme de segment de coque sphérique.

10. Procédé pour la fabrication d'un insert de nettoyage de gaz brûlés (3) pour un dispositif de traitement de gaz brûlés (1) selon l'une quelconque des revendications 1 à 8,
**caractérisé par** les étapes suivantes :
- introduction du au moins un élément de nettoyage de gaz brûlés (5) dans le carter d'insert (4) cylindrique,
- transformation d'au moins une partie d'extrémité cylindrique du carter d'insert (4) en une partie d'extrémité (10) en forme de segment de coque sphérique.
